# EUROPEAN PATENT APPLICATION

(11) **EP 2 138 782 A2**
(43) Date of publication of application: **30.12.2009**
(21) Application number: 09008208.2
(22) Date of filing: 23.06.2009
(51) Int. Cl.: F25B 9/14

(54) **Driving circuit**

(30) Priority: 25.06.2008 JP 2008166351
(71) Applicant: Sumitomo Heavy Industries, LTD., Tokyo 141-6025 (JP)
(72) Inventor: Kimura, Yoshiyuki, Niihama-shi Ehime 792-8588 (JP)
(74) Representative: HOFFMANN EITLE

(57) **Abstract**

A driving circuit which functions as an electromagnetic brake suitably when operation is stopped and which drives a refrigerating machine suitably when operation is started is provided. A driving circuit 50 in a refrigerating machine 1 including a compressor 10 which moves a piston 11 to compress a working fluid, and a cold head 20 which expands the working fluid compressed to cause a refrigerating action is provided. The driving circuit includes an inverter circuit 42 which generates an alternating voltage for reciprocating the piston 11, movable coils 15 connected to the piston 11 to reciprocate the piston 11 by the alternating voltage from the inverter circuit 42, a capacitor 44 arranged between the inverter circuit 42 and the movable coils 15 and connected in parallel with the movable coils 15. A closed circuit including the movable coils 15 is formed by the capacitor 44 in a case where the alternating voltage is not made to be generated in the inverter circuit 42, and electromagnetic brake is made to act on the movable coils 15 and the piston 11.

## Description

### BACKGROUND OF THE INVENTION

### Field of the Invention

The present invention relates to a driving circuit in a refrigerating machine for causing ultralow temperature. Priority is claimed Japanese Patent Application JP2008-166351 filed in the Japanese Patent Office on June 25, 2008, the entire contents of which are incorporated herein by reference.

### Related Background Art

A Stirling refrigerating machine exists as a refrigerating machine for causing ultralow temperature (for example, 80 K). This Stirling refrigerating machine includes a compressor which compresses a working fluid, a cold head which expands this working fluid and causes a refrigerating action after the compressed working fluid flows in, and a guide flow passage which connects these. The compressor includes a piston which can reciprocate in a predetermined stroke range, and a movable coil which is connected to this piston, is arranged in a predetermined magnetic field, and moves by applying an alternating current, and the piston is adapted to reciprocate by the movement of the movable coil.

Meanwhile, in a case where a refrigerating machine is carried or is loaded on a satellite and launched, application of an electric current to the movable coil is brought into an OFF state in order to stop the operation of the refrigerating machine. When an shock is exerted on such a refrigerating machine from the outside, there is a possibility that the movable coil to which application of an electric current is brought into an OFF state and which is brought into an unloaded state may vibrate and resonate, and the resonating movable coil, and the piston connected to the movable coil may contact other parts inside the refrigerating machine beyond a predetermined stroke range. Thus, as shown in Japanese Patent Unexamined Publication No. OS-010617, a switching unit is provided between a power supply section which supplies a driving voltage to the movable coil, and the movable coil connected to the power supply section with a pair of conducting wires, and when the operation of the refrigerating machine is stopped, the pair of conducting wires is short-circuited on the way by bringing a switching unit into a "closed" state, thereby forming a closed circuit composed of the movable coil and the pair of conducting wires. By such a closed circuit, an electric current generated by a counter-electromotive force in the movable coil which has been moved in a predetermined magnetic field by an external shock returns to the movable coil via a short-circuited spot, this electric current acts in a direction opposite to the movement direction of the movable coil, and the circuit functions as an electromagnetic brake. By this electromagnetic brake function, the vibration of the movable coil is reduced, and contact, damage, or the like is prevented.

However, the driving circuit in the above-described conventional refrigerating machine includes the switching unit which switches "closed" and "opened." Therefore, for example, in a case where the switching unit does not operate due to a certain factor after the refrigerating machine is loaded on a satellite and launched, the pair of conducting wire remains short-circuited, and the refrigerating machine may not function suitably. Moreover, it is very difficult to check the refrigerating machine after being loaded on a satellite and lunched. Additionally, although such a switching unit is constituted by, for example, a relay contact point X, a relay control circuit, and the like, there is a possibility that the reliability of the relay is not so high compared with other parts, and the switching unit may not operate suitably. Moreover, since the relay control circuit is necessary, the whole driving circuit is complicated.

### SUMMARY OF THE INVENTION

The invention was made in view of the aforementioned situation, and the object thereof is to provide a driving circuit which functions as an electromagnetic brake suitably when operation is stopped and which drives a refrigerating machine suitably when operation is started.

The driving circuit according to the invention is a driving circuit in a refrigerating machine including a compressing section which moves a piston to compress a working fluid, and a refrigerating section which allows the working fluid compressed in the compressing section to flow thereinto and moves a displacer to expand the working fluid to cause a refrigerating action. The driving circuit includes an alternating-current generating section which generates an alternating current for reciprocating the piston or the displacer, movable coils arranged in a predetermined magnetic field and connected to the piston or the displacer to reciprocate the piston or the displacer along a predetermined axis by the alternating current from the alternating-current generating section, and a capacitor arranged between the alternating-current generating section and the movable coils and connected in parallel with the movable coils. A closed circuit including the movable coils is formed by the capacitor in a case where the alternating current is not made to be generated in the alternating-current generating section.

In this driving circuit, the capacitor connected in parallel with the movable coils is provided between the alternating-current generating section and the movable coils. In a case where an alternating current is not made to be generated in the alternating-current generating section, i.e., in a case where the operation of the refrigerating machine is stopped, an alternating-current closed circuit is formed as the movable coil is short-circuited by the capacitor, the current generated by a counter-electromotive force in the movable coils which moves due to the vibration from the outside or the like returns to the movable coils via the capacitor, and this current acts in a direction opposite to the movement direction of the movable coils, whereby the electromagnetic brake acts on the piston or displacer. On the other hand, in a case
where an alternating current is made to be generated in the alternating-current generating section, that is, in a case where the operation of the refrigerating machine is started, since the capacitor is connected in parallel with the movable coils, the alternating current from alternating-current generating section is transmitted to the movable coils without separating the capacitor (corresponding to "opened" in the switching unit), so that the refrigerating machine can be suitably operated. Accordingly, in spite of the driving circuit of a simple configuration in which the capacitor is provided in parallel with the movable coils to form the closed circuit, the driving circuit can function as an electromagnetic brake suitably when operation is stopped (application of an electric current to the movable coils in an OFF state), and drive the refrigerating machine suitably when operation is started.

Additionally, in this driving circuit, preferably, the alternating current from the alternating-current generating section is set to be larger than an alternating current generated by a counter-electromotive force caused by the reciprocation of the movable coils in the predetermined magnetic field. Thereby, when operation as a refrigerating machine is made, the influence caused by the counter-electromotive force can be reduced and suitable driving as a refrigerating machine can be made.

Additionally, in this driving circuit, it is preferable that the capacitor is provided on the side of a driver of the driving circuit. ' However, the capacitor may be provided in the compressing section, or is directly provided on a pair of conducting wires which connects the driver and compressing section. In addition, preferably, the capacitor is not grounded.

According to the invention, it is possible to provide a driving circuit which functions as an electromagnetic brake suitably when operation is stopped and which drives a refrigerating machine suitably when operation is started in spite of a simple configuration having a capacitor.

### BRIEF DESCRIPTION OF THE DRAWINGS

Fig. 1 is a schematic diagram typically showing the configuration of a refrigerating machine including a compressor and a cold head.
Fig. 2 is a circuit diagram of a driving circuit according to this embodiment.
Fig. 3 is a graph showing an alternating current to be applied to a movable coil.

### DESCRIPTION OF THE PREFERRED EMBODIMENTS

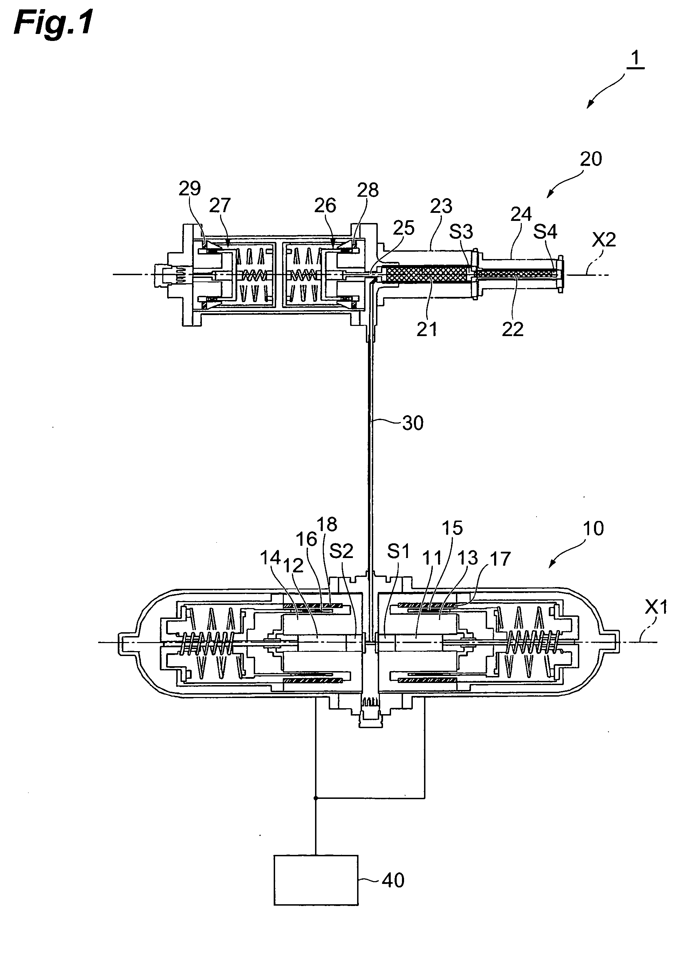

An embodiment of the invention will described below in detail with reference to the accompanying drawings. In addition, in the description of the drawings, the same reference numerals will be given to the same elements, and duplicate description will be omitted. Fig. 1 is a sectional view showing the entire configuration of a refrigerating machine according to this embodiment.

The refrigerating machine 1 is a Stirling refrigerating machine using a Stirling cycle, and as shown in Fig. 1, includes a compressor (compressing section) 10, a cold head (refrigerating section) 20, a guide flow passage 30 which connects these, and a driving driver (driver) 40 which controls driving of the compressor 10.

The compressor 10 includes a pair of pistons 11 and 12 which can reciprocate in the direction of a central axis X1, cylinders 13 and 14 which house the pair of pistons 11 and 12, respectively, to form compression spaces S and S2, movable coils 15 and 16 which are ' connected to the pair of pistons 11 and 12, respectively, and permanent magnets 17 and 18 which give a predetermined magnetic field to the movable coils 15 and 16.

The cold head 20 includes displacers 21 and 22 which can reciprocate in the direction of a central axis X2, cylinders 23 and 24 which house the displacers 21 and 22 to form expansion spaces S3 and S4, an actuating rod 25 which actuates the displacers 21 and 22, a movable coil 26 connected to the displacers 21 and 22 via the actuating rod 25, a vibration suppressing coil 27 which makes a pair with the movable coil 26 to suppress the vibration caused by the movable coil 26, and permanent magnets 28 and 29 which give a predetermined magnetic field to the movable coil 26 and the vibration suppressing coil 27.

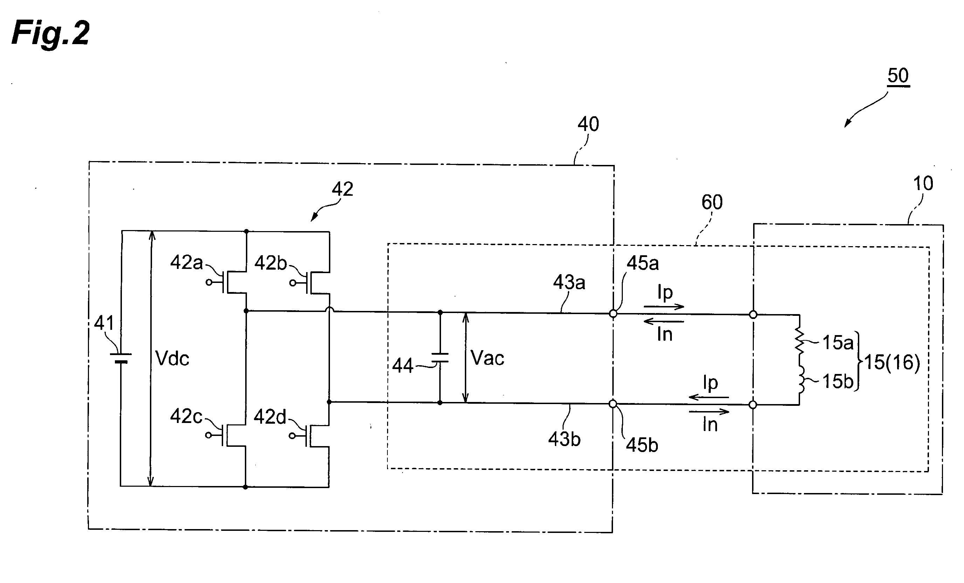

The driving driver 40 controls driving of the compressor 10, and as shown in Fig. 2, is connected to the movable coils 15 and 16 of the compressor 10 by a pair of wiring lines. The driving driver 40 and the movable coils 15 and 16 constitute a driving circuit 50. The driving circuit 50 will not be described below in detail. Since the movable coil 16 which constitutes the driving circuit 50 has the same configuration line-symmetrically to the movable coil 15, the description thereof will be omitted.

As described above, the driving circuit 50 is formed over the driving driver 40 and the compressor 10, and has the movable coil 15, a direct-current power supply 41 which generates a direct-current voltage Vdc, an inverter circuit 42 (alternating-current generating section) which converts the direct-current voltage Vdc supplied from the direct-current power supply 41 into an alternating voltage Vac, a pair of wiring lines 43a and 43b which leads the alternating voltage Vac to the movable coil 15 from the inverter circuit 42, and a capacitor 44 provided between the pair of wiring lines 43a and 43b. The movable coil 15 is composed of, for example, a resistor 15a and a coil 15b, is arranged in a predetermined magnetic field to be given by a permanent magnet 17, and is adapted to reciprocate along the central axis X1 (refer to Fig. 1) as an alternating voltage is given thereto.

The inverter circuit 42 is constituted by, for example, an H-bridge type inverter circuit, and includes four switching elements 42a, 42b, 42c, and 42d. The switching elements 42a to 42d are constituted by, for example, transistors, such as MOS-FET. The drain of the switching element 42a is connected to one input of the inverter circuit 42, and the source of the switching element 42a is connected to one output of the inverter circuit 42 and the drain of the switching element 42c. The source of the switching element 42c is connected to the other input of the inverter circuit 42. Additionally, the drain of the switching element 42b is connected to one input of the inverter circuit 42, and the source of the switching element 42b is connected to the other output of the inverter circuit 42 and the drain of the switching element 42d. The source of the switching element 42d is connected to the other input of the inverter circuit 42. The respective gates of the switching elements 42a to 42d are connected to a control section which is not shown. The control section generates an electric signal for driving the switching elements 42a to 42d by, for example, a PWM method.

The wiring line 43 a has one end connected to one output of the inverter circuit 42 and the other end connected to one end of the movable coil 15. Additionally, the wiring line 43b has one end connected to the other output of the inverter circuit 42 and the other end connected to the other end of the movable coil 15. In addition, as shown in Fig. 2, the wiring lines 43a and 43b may be constituted by wiring lines which connect the inverter circuit 42 and output terminals 45a and 45b of the driving driver 40, and other wiring lines which connect the output terminals 45a and 45b and the first movable coil 15.

The capacitor 44 has a predetermined capacity, is arranged between the inverter circuit 42 and the movable coil 15, and has one end connected to the wiring line 43 a and the other end connected to the wiring line 43b so as to become parallel with the first movable coil 15. In addition, the capacitor 44 is not grounded.

Subsequently, the operation of the refrigerating machine 1 by the driving circuit 50 which has such configuration will be described. First, a case where application of an electric current to the movable coils 15 and 16 is in an OFF state, i.e., a case where the operation of the refrigerating machine 1 has stopped will be described.

In a case where application of an electric current to the movable coils 15 and 16 is in an OFF state, the direct-current voltage Vdc is not generated by the direct-current power supply 41, and the alternating voltage Vac from the inverter circuit 42 is not given to the movable coils 15 and 16. Meanwhile, an alternating-current closed circuit 60 including the movable coils 15 and 16 is formed by the capacitor 44 connected so as to become parallel with the movable coils 15 and 16 between the wiring line 43a and the wiring line 43b. Also, when the movable coils 15 and 16 vibrate by the shock from the outside, a counter-electromotive force is generated by the movement of the movable coils 15 and 16 arranged in a predetermined magnetic field formed by the permanent magnets 17 and 18 by that vibration, and an alternating current is generated on the basis of the counter-electromotive force. This alternating current returns to the movable coils 15 and 16 through the capacitor 44, and acts in the direction in which it hinders the vibration of the movable coils 15 and 16. This reduces the movement by the vibration of the movable coils 15 and 16. That is, electromagnetic brake is applied to restrict that the movable coils 15 and 16 or the pistons 11 and 12 connected to the movable coils 15. and 16 move more than a predetermined stroke range.

Next, a case where application of an electric current to the movable coils 15 and 16 is switched to an ON state will be described. In addition, when application of an electric current to the movable coils 15 and 16 is change to an ON state from an OFF state, it is not necessary to perform that the capacitor 44 constituting the closed circuit 60 is separated (corresponding to "opened" in a switching unit).

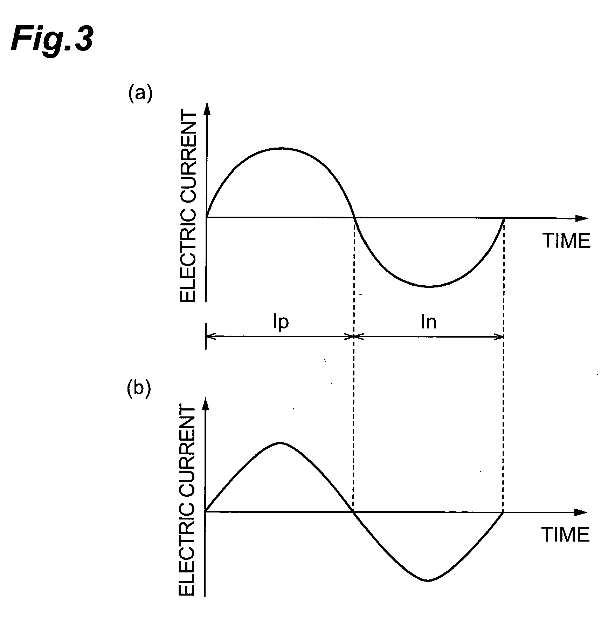

In a case where application of an electric current to the movable coils 15 and 16 is changed to an ON state, the direct-current voltage Vdc is generated by the direct-current power supply 41, the direct-current voltage Vdc is transmitted to the inverter circuit 42 and converted into the alternating voltage Vac, and the alternating voltage Vac is given to the movable coils 15 and 16 via the pair of wiring lines 43a and 43b. As shown in Fig. 3A, a half cycle during which an electric current Ip flows into the wiring line 43b from the wiring line 43a (that is, in a positive direction), and a half cycle during which an electric current In flows into the wiring line 43a from the wiring line 43b (that is, in a negative direction) are alternately repeated by this alternating voltage Vac. In addition, when the alternating voltage Vac is given to the movable coils 15 and 16, the alternating voltage Vac is also given to the capacitor 44, which however does not almost have influence on the movable coils 15 and 16 since the capacitor 44 and the movable coils 15 and 16 are connected in parallel.

By such alternating currents .Ip and In, the coils 15 and 16 arranged in a predetermined magnetic field reciprocate line-symmetrically, and the pistons 11 and 12 connected to the coils 15 and 16, respectively, reciprocate. In the refrigerating machine 1, the pair of pistons 11 and 12 moves line-symmetrically in a central direction to simultaneously compress the working fluid, for example, helium in the compression spaces S1 and S2, and the compressed working fluid is fed to the cold head 20 via the guide flow passage 30 with predetermined timing. Then, the working fluid fed to the cold head 20 is supplied to the expansion spaces S3 and S4, and the movable coil 26 is driven by the driving driver which is not shown, whereby the displacers 21 and 22 move to expand the working fluid in the expansion spaces S3 and S4 and to cause a refrigerating action in the cold head 20. Thereafter, the expanded working fluid is returned to the compressor 10 via the guide flow passage 30, and this process is repeated to drive as a refrigerating machine.

In addition, when the movable coils 15 and 16 are reciprocated by the alternating voltage Vac, an alternating current is generated by the same counter-electromotive force as the counter-electromotive force generated by the vibration of the movable coils 15 and 16 when application of an electrical current is in an OFF state. However, the alternating currents Ip and In by the alternating voltage Vac are set to be extremely larger than the alternating current by this counter-electromotive force. Therefore, although the actual alternating currents Ip and In, as shown in Fig. 3B, becomes a composition of the current by the alternating voltage Vac and the current by the counter-electromotive force, and become a waveform including strain, there is almost no influence by the counter-electromotive force.

As described in detail above, the driving circuit 50 according to this embodiment has the capacitor 44 connected in parallel with the movable coils 15 and 16 between the inverter circuit 42 and the movable coils 15 and 16. In a case where an alternating voltage is not made to be generated in the inverter circuit 42, i.e., in a case where the operation of the refrigerating machine 1 is stopped, the alternating-current closed circuit 60 is formed by the capacitor 44, the movable coils 15 and 16, and the pair of wiring lines 43a and 43b, the current generated in the movable coils 15 and 16 which move due to the vibration from the outside or the like returns to the movable coils 15 and 16 via the capacitor 44, and this current acts in a direction opposite to the movement direction of the movable coils 15 and 16, and the alternating current closed circuit 60 functions as an electromagnetic brake.

On the other hand, in a case where an alternating voltage is made to be generated in the inverter circuit 42, that is, in a case where the operation of the refrigerating machine 1 is started, since the capacitor 44 is connected in parallel with the movable coils 15 and 16, the alternating voltage from the inverter circuit 42 is transmitted to the movable coils 15 and 16 via the pair of wiring lines 43a and 43b without separating the capacitor 44, so that the refrigerating machine 1 can be suitably operated. Accordingly, in spite of a simple configuration in which the capacitor 44 is provided in parallel with the movable coils 15 and 16 to form the closed circuit 60, it is possible to provide the driving circuit 50 which functions as an electromagnetic brake suitably when the operation of the refrigerating machine 1 is stopped and which drive the refrigerating machine suitably when the operation of the refrigerating machine 1 is started.

In addition, the invention is not limited to the above embodiment, and various modifications thereof can be made. For example, although the configuration in which the capacitor 44 is provided in the driving driver 40 has been described in the above embodiment described, the capacitor 44 may be arranged between the inverter circuit 42 and the movable coils 15 and 16 and be provided in a spot connected in parallel with the movable coils 15 and 16. For example, the capacitor may be provided within the compressor 10, or between the wiring lines 43a and 43b between the compressor 10 and the driving driver 40: Additionally, a capacitor used for a filter circuit or the like may also be used as the capacitor 44 for constituting a closed circuit.

Additionally, although the example in which the driving circuit 50 is used as the driving circuit of the compressor 10 has been shown in the above embodiment, the same driving circuit may be provided in the cold head 20. In this case, instead of the pistons 11 and 12, the vibration of the .displacers 21 and 22 which move due to vibration from the outside or the like is reduced. Moreover, the configuration of the driving circuit 50 described above may be used for refrigerating machines other than a Stirling refrigerating machine, such as a GM refrigerating machine or a JT compressor.

## Claims

1. A driving circuit in a refrigerating machine including a compressing section which moves a piston to compress a working fluid, and a refrigerating section which allows the working fluid compressed in the compressing section to flow thereinto and moves a displacer to expand the working fluid to cause a refrigerating action, the driving circuit comprising:
an alternating-current generating section which generates an alternating current for reciprocating the piston or the displacer
movable coils arranged in a predetermined magnetic field and connected to the piston or the displacer to reciprocate the piston or the displacer along a predetermined axis by the alternating current from the alternating-current generating section; and
a capacitor arranged between the alternating-current generating section and the movable coils and connected in parallel with the movable coils,
wherein a closed circuit including the movable coils is formed by the capacitor in a case where the alternating current is not made to be generated in the alternating-current generating section.

2. The driving circuit of a refrigerating machine according to Claim 1, **characterized in that** the alternating current from the alternating-current generating section is set to be larger than an alternating current generated by a counter-electromotive force caused by the reciprocation of the movable coils in the predetermined magnetic field.

3. The driving circuit of a refrigerating machine according to Claim 1 or 2, **characterized in that** the capacitor is provided on the side of a driver of the driving circuit.

4. The driving circuit of a refrigerating machine according to any one of Claims 1 to 3, **characterized in that** the capacitor is not grounded.
